# EUROPEAN PATENT SPECIFICATION

(11) **EP 3 292 739 B1**
(45) Date of publication and mention of the grant of the patent: **19.02.2020**
(21) Application number: 16717622.1
(22) Date of filing: 19.04.2016
(51) Int. Cl.: H05B 33/14, G03B 21/20, F21K 9/64, F21Y 115/10, F21V 9/30

(54) **HIGH INTENSITY LIGHT SOURCE WITH TEMPERATURE INDEPENDENT COLOR POINT**
HOCHINTENSITÄTSLICHTQUELLE MIT TEMPERATURUNABHÄNGIGEM FARBPUNKT
SOURCE LUMINEUSE À HAUTE INTENSITÉ AVEC POINT DE COULEUR INDÉPENDANT DE LA TEMPÉRATURE

(30) Priority: 07.05.2015 EP 15166782
(43) Date of publication of application: 14.03.2018
(73) Proprietor: Signify Holding B.V., 5656 AE Eindhoven (NL)
(72) Inventor: HIKMET, Rifat, Ata, Mustafa, 5656 AE Eindhoven (NL); HOHN, Roman, 5656 AE Eindhoven (NL)
(74) Representative: Verweij, Petronella Daniëlle
(86) International application number: PCT/EP2016/058651
(87) International publication number: WO 2016/177570

(56) References cited:
- EP-A1- 2 639 284
- EP-A1- 2 814 072
- WO-A1-2006/054203
- WO-A1-2015/015363
- US-A1- 2011 227 476
- US-A1- 2015 061 489

## Description

### FIELD OF THE INVENTION

The invention relates to a lighting device comprising a lighting unit, wherein the lighting unit comprises a solid state light source configured to generate light source light and a luminescent material configured to convert at least part of the light source light into luminescent material light. The invention also relates to a lighting apparatus comprising one or more of such lighting devices. Further, the invention relates to the use of the lighting device or the lighting apparatus for specific applications.

### BACKGROUND OF THE INVENTION

The temperature dependence of the emission intensity of certain phosphors is known in the art. US8105502, for instance, mentions CaAlSiN₃:Eu as a red luminescent material for LED lamp using the light-emitting diode. Such luminescent material when excited in a broad (ultraviolet to blue) wavelength range shows luminescence in the range of an orange color region to an infrared region. Among many luminescent materials, this CaAlSiN₃:Eu has - according to US8105502 - relatively excellent temperature characteristics. It is further indicated that it is estimated that as the power of LED lamp is increased, the temperature of the device is further increased, and that accordingly luminescent materials are required that have more excellent temperature characteristics.

WO2015015363 describes a light-emitting arrangement is disclosed, which is adapted to produce white output light enhancing the color perception of e.g. food in retail environments. The light-emitting arrangement comprises at least one blue light-emitting element adapted to emit light having an emission peak in a first wavelength range of from 440 to 460 nm, and at least one deep blue light-emitting element adapted to emit light having an emission peak in a second wavelength range of from 400 to 440 nm. Further, the light-emitting arrangement comprises at least one narrow band wavelength converting material arranged to receive light emitted by said deep blue light-emitting element, and at least one broadband wavelength converting material arranged to receive light emitted by at least one of said blue light-emitting element and said deep blue light-emitting element. A spotlight comprising such a light-emitting arrangement, and an illumination device comprising a plurality of the light-emitting arrangements, is also disclosed.

WO2006054203 (see also below) describes a light-emitting device comprising a conversion structure and one or several LEDs, which emit light into the conversion structure. The light is then converted and emitted with a high radiant flux.

High brightness light sources are interesting for various applications including spots, stage-lighting, automotive lighting, such as headlamps, and digital light projection. For this purpose it is possible to make use of so-called light concentrators where shorter wavelength light is converted to longer wavelengths in a highly transparent luminescent material. A rod of such a transparent luminescent material can be used. Illuminated by LEDs longer wavelength emission (converted light) is produced within the rod. Converted light which will stay in the luminescent material (such as a doped garnet) in the waveguide mode and can then be extracted from one of the surfaces leading to an intensity gain. However, such a luminescent convertor based light source may be rather inefficient, and obtaining extremely high intensities is not easy. Furthermore, inclusion of a blue component for obtaining white light is not trivial.

Hence, prior art lighting devices suffer from temperature dependency of the emission (luminescence) of the luminescent material, which especially becomes relevant when subjecting such luminescent material to high power excitations.

### SUMMARY OF THE INVENTION

Hence, it is an aspect of the invention to provide an alternative lighting device, which preferably further at least partly obviates one or more of above-described drawbacks.

Solutions to improve the independency of the temperature dependency of the emission of the luminescent material may amongst others be chosen from cooling the luminescent material, choosing specific types of luminescent material (see above), choosing other types of light sources, waiving the use of luminescent materials, etc.

We have surprisingly found that for a garnet type of phosphors there is a point where the absorbance is substantially not temperature dependent. We therefore suggest matching the emission peak of a solid state light source, or other, especially narrow band light source with the absorption wavelength of the phosphor where the absorbance of the phosphor shows almost no temperature dependence (over a broad temperature range) in order to obtain a substantially temperature independent emission intensity. Therefore, in specific embodiments a white lighting device is provided having a substantially temperature independent color point, such as over a range of 50-200 °C.

Hence, in a first aspect the invention provides a lighting device ("device") comprising a lighting unit, wherein the lighting unit comprises (i) at least one solid state light source configured to generate light source light, and (ii) an elongated luminescent concentrator comprising at least one light input surface and a light exit surface extending at an angle different from zero with respect to one another, wherein the at least one solid state light source is configured to provide the light source light to the at least one light input surface, the luminescent concentrator comprising a luminescent material configured to convert at least part of the light source light into luminescent material light (herein also indicated as "emission" or "luminescence"), wherein especially the luminescent material comprises a cerium doped garnet material, wherein the lighting device is configured to generate lighting device light ("device light") comprising at least part of said luminescent material light, wherein the luminescent material is configured to provide said luminescent material light upon excitation by said light source light in an excitation band (EX) of said luminescent material, wherein the light source is configured to provide said light source light with a full width half maximum (FWHM) of equal to or less than 30 nm, especially equal to or less than 20 nm, even more especially equal to or less than 10 nm, yet even more especially equal to or less than 5 nm, such as especially equal to or less than 2 nm, and wherein said light source is configured to excite the luminescent material in an isosbestic point (IP) of said excitation band (EX). The light source is configured to provide said light source light having a peak maximum, wherein said peak maximum is selected within 10 nm of said isosbestic point.

With such a lighting device, e.g. white light may be generated of which the color point may substantially be independent of the luminescent material temperature, such as a luminescent material temperature in the range of 50-100 °C, even more in the range of 50-150 °C, yet even more especially in the range of 50-200 °C, or even to higher temperatures. Substantially independent color temperatures for white light were found when cerium comprising garnets were excited in their isosbestic (excitation) point over a temperature range of 50-250 °C. With such a lighting device, the solid state light source and the luminescent material of the concentrator are especially not in physical contact with each other, e.g. there may be a slit or spacing in between. Therefore, the temperature of the luminescent material may (even) be much higher (than the temperature of the light source). During the operation of conventional white LEDs, wherein the luminescent material is placed on top of the LED die and the absorption peak of the luminescent material substantially corresponds to the emission peak of the LED (i.e. the excitation radiation), there may be not much variation in temperature. Hence, the color temperature may substantially stay the same. However, at least for a device wherein there is a non-zero distance between the solid state light source and the luminescent material of the concentrator, output from a solid state light source, such as a LED, may result therein that the temperature of the luminescent material, and hence the luminescent concentrator, can be found to vary over a substantial temperature range. Herein, the temperature refers to especially the temperature of the luminescent material, which may (thus) be substantially higher than the temperature of the solid state light source. It appears that it is advantageous to configure the luminescent material remote (i.e. non-zero distance) from the solid state light source, so that it is not in thermal contact with the solid state light source. Hence, especially the light source and the luminescent material of the luminescent concentrator are preferably not in physical contact. More especially, a light emitting surface of the light source and the luminescent material of the luminescent concentrator are preferably not in physical contact (see further also below). The non-zero distance may especially be in the range of 0.1-100 mm, such as 0.2-20 mm. However, even larger distances than 100 mm may be possible, such as up to 200 mm, or yet even larger.

In spectroscopy, an isosbestic point is a specific wavelength, wavenumber or frequency at which the total absorbance of a sample does not change during a chemical reaction or a physical change of the sample. Here, the physical change indicates the subjection of the luminescent material to the excitation light, by which part of the luminescent species of the luminescent materials, such as trivalent cerium ions in the case of cerium doped garnet (see also below), are brought in the excited state to subsequently decay by providing the luminescence (herein also indicated as emission). Hence, the isosbestic point may herein also be indicated as isosbestic excitation point.

Each luminescent material has an emission spectrum and an excitation spectrum. An emission may have a corresponding excitation spectrum. Hence, an emission band may have a corresponding excitation band. Herein, excitation may especially take place in an excitation band closest in energy to the emission band. Especially, the emission band is Stokes-shifted relative to the emission band. Hence, in general the excitation takes places in the lowest energetic excitation band. The phrase "excitation by said light source light in an excitation band of said luminescent material" may also be read as excitation by said light source light in an excitation band corresponding to the luminescent material light of said luminescent material. The luminescent material light is the light that emanates from the luminescent material upon excitation by the light source light. The term "luminescent material light" may also be indicated as "emission" and the term "light source light" may also be indicated as excitation light.

Here, the isosbestic point especially refers to the excitation wavelength where under excitation at the same wavelength the integrated emission intensity changes between 50-100 °C with less than 5%, especially less than 2% (relative to the integrated emission intensity at 50 °C). Especially, the isosbestic point refers to the excitation wavelength where under excitation at the same wavelength the integrated emission intensity changes between 50-150 °C with less than 10%, especially less than 5%, even more especially less than 2% (relative to the integrated emission intensity at 50 °C). Yet even more especially, the isosbestic point refers to the excitation wavelength where under excitation at the same wavelength the integrated emission intensity changes between 50-200 °C with less than 10%, especially less than 5%, even more especially less than 2% (relative to the integrated emission intensity at 50 °C). Hence, the luminescent material temperature may vary in the range of e.g. 50-100 °C, e.g. dependent upon the power of the light source, but nevertheless the color point of the lighting device light may substantially be independent thereof.

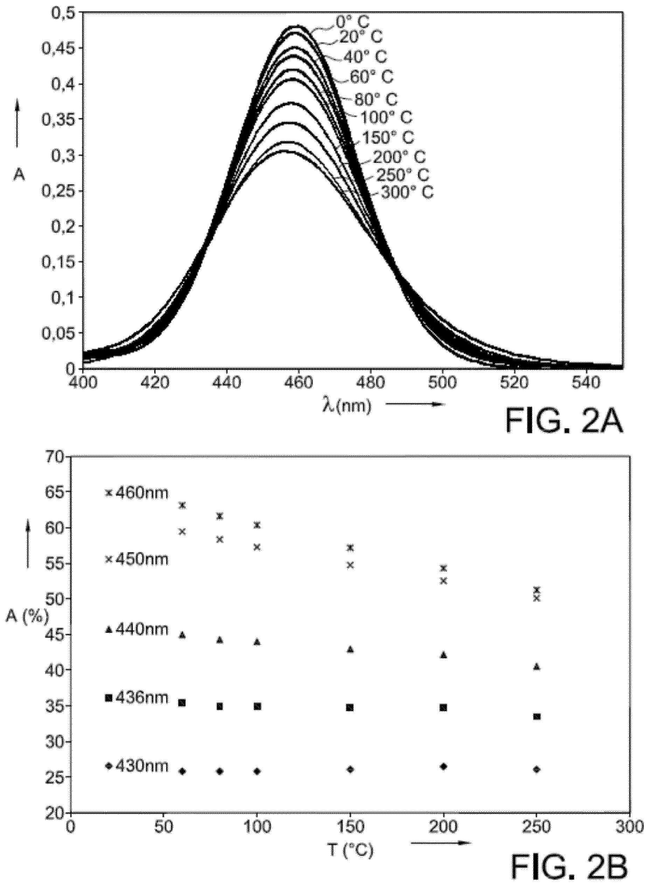

Further, excitation of the luminescent material described herein is especially not based on a line excitation (absorption), such as an excitation having a spectral width at room temperature of less than 5 nm at room temperature ("RT"; defined as 20 °C). Especially, the excitation of the luminescent material is a band excitation, having an FWHM of at least 20 nm, such as at least 40 nm at RT (see e.g. also Fig. 2a). Hence, in contrast to prior art systems, the light source is not configured to excite at the spectral maximum of such excitation band, but at one of the wings. The position of the isosbestic point may depend upon the luminescent material, but is generally found at about 30-45% of the peak height of the excitation maximum (at RT). The luminescent material, more precisely its excitation band, may have two isosbestic (excitation) points, one at the high energy flank of the excitation band and one at the low energy flank of the excitation band. Their heights at room temperature are not necessarily the same.

The luminescent material may be chosen such that at least one isosbestic point is in the visible part of the spectrum. This may advantageously allow excitation in the visible wavelength range, whereby part of the excitation light, i.e. especially part of the light source light, is converted into luminescent material light but part of the light source light may also be used as part of the lighting device light. Hence, the lighting device is configured to generate lighting device light comprising at least part of said luminescent material light and optionally also part of the light source light. Therefore, in an embodiment the luminescent material comprises an isosbestic point (IP) in the blue wavelength range of the visible spectrum. Alternatively or additionally, the luminescent material comprises an isosbestic point (IP) in the green wavelength range of the visible spectrum. Alternatively or additionally, the luminescent material comprises an isosbestic point (IP) in the red wavelength range of the visible spectrum, especially when the luminescent material has a relatively small Stokes shift, such as equal to or smaller than 100 nm, especially equal to or smaller than 50 nm. Alternatively or additionally, the luminescent material comprises an isosbestic point in another part of the visible part of the spectrum.

Assuming that the luminescent material comprises an isosbestic (excitation) point in the blue, especially a blue light emitting solid state light source may be applied, like a blue LED or a blue laser. Hence, in an embodiment the light source is configured to generate blue light source light.

Especially, the solid state light source is a light source that during operation emits (light source light) at least light at a wavelength selected from the range of 200-490 nm, especially a solid state light source that during operation emits at least light at wavelength selected from the range of 400-490 nm, even more especially in the range of 440-490 nm. This light may partially be used by the wavelength converter, i.e. the luminescent material. Hence, in a specific embodiment, the solid state light source is configured to generate blue light (source light). In a specific embodiment, the light source comprises a solid state LED light source. The term "solid state light source" may also relate to a plurality of light sources, such as 2-20 solid state LED light sources. Hence, the term LED may also refer to a plurality of LEDs.

Hence, the light source is radiationally coupled to the luminescent material of the luminescent concentrator. The term "radiationally coupled" especially means that the light source and the luminescent material are associated with each other so that at least part of the radiation, or light, emitted by the light source is received by the luminescent material (and at least partly converted into luminescence in the concentrator).

During use of the lighting device, the light source excites the luminescent material in an isosbestic point of said excitation band. Hence, the light source and luminescent material are associated with each other and the light source is dedicated to the specific luminescent material or the specific luminescent material is dedicated to the light source. Thereby, the lighting device during use provides with the light source light source light in an isosbestic point of said excitation band of the (radiationally coupled) luminescent material.

The luminescent material may especially be an inorganic luminescent material, such as quantum dot based luminescent material or an inorganic phosphor. Though the term "luminescent material" may refer in embodiments to a combination of two or more different luminescent material, herein the terms "luminescent material" or "luminescent material radiationally coupled to the light source" in other embodiments especially refer to substantially a single luminescent material. In an embodiment, the luminescent material comprises at least 90 wt.%, especially at least 95 wt.%, of a single luminescent species (such as quantum dots, organic dyes or inorganic phosphors). For instance, the luminescent material (whether embedded or not) may comprise at least 90 wt.% of CdS/ZnS core/shell quantum dots, such as dots (core) in rods (shell).

Especially, the luminescent material comprises a luminescent material of the type A₃B₅O₁₂:Ce³⁺, wherein A is selected from the group consisting of Y, Gd, Tb and Lu, and wherein B is selected from the group consisting of Al, Ga and Sc. The luminescent material may (thus) comprise a garnet material. Hence, in an embodiment the luminescent material comprises a cerium doped garnet material of the class of A₃B₅O₁₂:Ce³⁺. Especially, the luminescent material may comprise a luminescent ceramic. The garnet material, especially the ceramic garnet material, is herein also indicated as "luminescent material". The luminescent material comprises a A₃B₅O₁₂:Ce³⁺ (garnet material), wherein A is especially selected from the group consisting of Sc, Y, Tb, Gd, and Lu, wherein B is especially selected from the group consisting of Al, Sc and Ga. More especially, A comprises one or more of yttrium (Y), gadolinium (Gd) and lutetium (Lu), and B comprises aluminum (Al). Such garnet may be doped with cerium (Ce), and optionally with other luminescent species such as praseodymium (Pr). In a specific embodiment, B consists of about 40% or more of Al and 60% or less of Ga. Especially, B comprises aluminum (Al), however, B may also partly comprise gallium (Ga) and/or scandium (Sc) and/or indium (In), especially up to about 20% of Al, more especially up to about 10 % of Al may be replaced (i.e. the A ions essentially consist of 90 or more mole % of Al and 10 or less mole % of one or more of Ga, Sc and In); B may especially comprise up to about 10% gallium. In another variant, B and O may at least partly be replaced by Si and N. Phrases like "A is selected from the group consisting of Y, Gd, Tb and Lu" and similar phrase indicate that A may comprise one or more of Y, Gd, Tb and Lu.

As indicated above, the element A may especially be selected from the group consisting of yttrium (Y), gadolinium (Gd), terbium (Tb) and lutetium (Lu).

Especially, A comprises at least one or more of Y, Gd and Lu, even more especially at least one or more of Y and Lu. Further, especially at least 90 mol.% of B is Al. in an embodiment, the luminescent material comprises (Y,Lu)₃Al₅O₁₂:Ce, wherein "Y,Lu" indicates that A may comprise one or more of Y and Lu.

The luminescent materials described herein are especially indicated with their chemical formulas. Even though the elements are indicated, the presence of impurities and/or other phases is not excluded. The luminescent material ("phosphor") may also include impurities, like one or more of halogen impurities and metal impurities. The luminescent material, may next to the one or more luminescent materials as defined herein, also include other phases, like one or more of the - already indicated (remaining) - flux material, remaining starting material(s) and one or more phases that are also formed during synthesis of the one or more (respective) luminescent materials. Likewise, the luminescent material may also include other phases, like one or more of the - already indicated (remaining) - flux material, remaining starting material(s) and one or more phases that are also formed during synthesis of the one or more (respective) luminescent materials. In general, the weight percentage of such other phase(s) will be below about 10 wt.% (relative to the total weight of the luminescent material). This is known in the art.

The luminescent material is provided embedded in a, for example transparent, waveguide. Especially the luminescent material is provided as luminescent concentrator, i.e. a luminescent concentrator is provided comprising the luminescent material. The luminescent concentrator is an elongated luminescent concentrator having a first surface and a second surface defining a length of the elongated luminescent concentrator, wherein the elongated luminescent concentrator comprises at least one light input surface and a light exit surface extending at an angle different from zero with respect to one another, like in the range of 5-175°, especially in the range of 45-135 °, like even more especially in the range of 60-120 °, like especially for example perpendicular, and the second surface comprises said light exit surface. The at least one solid state light source is configured to provide light source light to the at least one light input surface. In this way, a high brightness source may be generated. In an embodiment a plurality of solid state light sources are provided. In another embodiment the luminescent concentrator comprises two opposite light input surfaces, each light input surfaces receiving light emitted by at least one solid state light source. Thus, for example, a first set of solid state light sources may be provided to emit light towards a first light input surface of the luminescent concentrator and a second set of solid state light sources may be provided to emit light towards a second light input surface of the luminescent concentrator, which is opposite to the first light input surface.

In a further embodiment, the lighting device may further comprise an optical reflector configured downstream of the first surface and configured to reflect light back into the elongated luminescent concentrator, wherein the light exit surface is configured perpendicular to the at least one light input surface. This may further enhance the outcoupling of the light. In yet another embodiment the elongated luminescent concentrator may comprise a geometrical concentration factor (or area ratio factor), defined as the ratio of the area of the at least one light input surface and the area of the light exit surface, of at least 2. A factor larger than 1, especially 2 or larger, or even much larger, may provide high brightness sources, which may be applied amongst others also for projector purposes or other purposes. Yet, in another embodiment the lighting device may further comprise a collimator configured downstream of the light exit surface and configured to collimate the converter light.

The term "light concentrator" is herein used, as a plurality of light sources may irradiate a relative large surface (area) of the light converter, and a lot of converter light escapes from a relatively small area (exit window) of the light converter. Thereby, the specific configuration of the light converter provides its light concentrator properties. The light concentrator may provide Stokes-shifted light, which is Stokes shifted relative to the pump radiation. The light concentrator comprises a light transmissive body. The light concentrator is especially described in relation to an elongated light transmissive body, such as a ceramic rod. However, these aspects may also be relevant for other shaped ceramic bodies. The light transmissive body has light guiding or wave guiding properties. Hence, the light transmissive body is herein also indicated as waveguide or light guide. As the light transmissive body is used as light concentrator, the light transmissive body is herein also indicated as light concentrator. The light transmissive body will in general have (some) transmission of visible light in a direction perpendicular to the length of the light transmissive body. Without the activator such as trivalent cerium, the transmission in the visible might be close to 100%, such as at least 95%, like even at least 99%, such as even at least 99.5%.

Herein, the term "visible light" especially relates to light having a wavelength selected from the range of 380-780 nm. The transmission can be determined by providing light at a specific wavelength with a first intensity to the light transmissive body under perpendicular radiation and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

The luminescent concentrator may have any shape, such as beam like or rod like. However, the luminescent concentrator may also be disk like, etc. The invention is not limited to specific embodiments of shapes, neither is the invention limited to embodiments with a single exit or outcoupling surface. Below, some specific embodiments are described in more detail. Would the luminescent concentrator have a circular cross-section, then the width and height may be equal (and may be defined as diameter).

In a specific embodiment, the luminescent concentrator may especially have an aspect ratio larger than 1, i.e. the length is larger than the width. In general, the luminescent concentrator is a rod or bar (beam), though the luminescent concentrator does not necessarily have a square, rectangular or round cross-section. In general, the light source is configured to irradiate one of the longer surfaces (side edge), herein indicated as light input surface, and light escapes from a surface at a front (front edge), herein indicated as light exit surface. Especially, in embodiments the solid state light source, or other light source, is not in physical contact with the luminescent concentrator. Physical contact may lead to undesired outcoupling and thus a reduction in concentrator efficiency. Further, in general the luminescent concentrator comprises two substantially parallel surfaces, the light input surface and opposite thereof an opposite surface. These two surfaces define herein the width of the luminescent concentrator. In general, the length of these surfaces defines the length of the luminescent concentrator. However, as indicated above, and also below, the luminescent concentrator may have any shape, and may also include combinations of shapes. Especially, the at least one light input surface has a light input surface area (A) and the light exit surface has a light exit surface area (E), and the light input surface area (A) is at least 1.5 times, even more especially at least two times larger than the light exit surface area (E), especially at least 5 times larger, such as in the range of 2-50,000, especially 5-5,000 times larger. Hence, especially the elongated luminescent concentrator comprises a geometrical concentration factor, defined as the ratio of the area of the light input surfaces and the area of the light exit surface, of at least 1.5, such as at least 2, like at least 5, or much larger (see above). This allows e.g. the use of a plurality of solid state light sources (see also below). Especially, the light exit surface has a light exit surface area selected from the range of 1-100 mm². With such dimensions, the emissive surface can be small, whereas nevertheless high intensity may be achieved. As indicated above, the luminescent concentrator in general has an aspect ratio (of length/width). This allows a relatively small light exit surface, but a large light input surface, e.g. irradiated with a plurality of solid state light sources. In a specific embodiment, the luminescent concentrator has a width selected from the range of 0.5-100 mm. The luminescent concentrator is thus especially an integral body, having the herein indicated surfaces.

The generally rod shaped or bar shaped luminescent concentrator can have any cross sectional shape, but in embodiments has as a cross section the shape of a square, rectangle, round, oval, triangle, pentagon, or hexagon. Generally the concentrator bodies are cuboid, but may be provided with a different shape than a cuboid, with the light input surface having somewhat the shape of a trapezoid. By doing so, the light flux may be even enhanced, which may be advantageous for some applications. Hence, in some instances (see also above) the term "width" may also refer to diameter, such as in the case of a luminescent concentrator having a round cross section. Hence, in embodiments the elongated luminescent concentrator further has a width (W) and a height (H), with especially L>W and L>H. Especially, the first surface and the second surface define the length, i.e. the distance between these surfaces is the length of the elongated luminescent concentrator. These surfaces may especially be arranged parallel.

The luminescent concentrator may also be a cylindrically shaped rod. In embodiments the cylindrically shaped rod has one flattened surface along the longitudinal direction of the rod and at which the light sources may be positioned for efficient incoupling of light emitted by the light sources into the luminescent concentrator. The flattened surface may also be used for placing heat sinks. The cylindrical luminescent concentrator may also have two flattened surfaces, for example located opposite to each other or positioned perpendicular to each other. In embodiments the flattened surface extends along a part of the longitudinal direction of the cylindrical rod.

The luminescent concentrator as set forth below in embodiments according to the invention may also be folded, bended and/or shaped in the length direction such that the luminescent concentrator is not a straight, linear bar or rod, but may comprise, for example, a rounded corner in the form of a 90 or 180 degrees bend, a U-shape, a circular or elliptical shape, a loop or a 3-dimensional spiral shape having multiple loops. This provides for a compact luminescent concentrator of which the total length, along which generally the light is guided, is relatively large, leading to a relatively high lumen output, but can at the same time be arranged into a relatively small space. For example luminescent parts of the luminescent concentrator may be rigid while transparent parts of the luminescent concentrator are flexible to provide for the shaping of the luminescent concentrator along its length direction. The solid state light sources may be placed anywhere along the length of the folded, bended and/or shaped luminescent concentrator.

Parts of the luminescent concentrator that are not used as light incoupling or input area or light exit surface may be provided with a reflector. Hence, in an embodiment the lighting device further comprises a reflector configured to reflect luminescent material light back into the luminescent concentrator. Therefore, the lighting device may further include one or more reflectors, especially configured to reflect light back into the luminescent concentrator that escapes from one or more other surfaces than the light exit surface. Especially, a surface opposite of the light exit surface may include such a reflector, though in an embodiment not in physical contact therewith. Hence, the reflector may especially not be in physical contact with the luminescent concentrator. Therefore, in an embodiment the lighting device further comprises an optical reflector (at least) configured downstream of the first surface and configured to reflect light back into the elongated luminescent concentrator. Alternatively or additionally, optical reflectors may also be arranged at other surfaces and/or parts of surfaces that are not used to couple light source light in or luminescence light out. Especially, such optical reflectors may not be in physical contact with the luminescent concentrator. Further, such optical reflector(s) may be configured to reflect one or more of the luminescence and light source light back into the luminescent concentrator. Hence, substantially all light source light may be reserved for conversion by the luminescent material (i.e. the activator element(s) such as especially Ce³⁺) and a substantial part of the luminescence may be reserved for outcoupling from the light exit surface. The term "reflector" may also refer to a plurality of reflectors.

The solid state light source may comprise a light emitting surface comprising a light emitting surface area (AL), wherein the at least one light input surface of the concentrator comprises a light input surface area (A) and the light exit surface of the concentrator comprises a light exit surface area (E), wherein 0.8≤A/AL≤1.2 and wherein 0.8≤E/AL≤1.5, especially 1≤E/AL≤1.5.

The terms "coupling in" and similar terms and "coupling out" and similar terms indicate that light changes from medium (external from the luminescent concentrator into the luminescent concentrator, and vice versa, respectively). In general, the light exit surface will be a surface (or a part of a surface), configured (substantially) perpendicular to one or more other surfaces of the waveguide. In general, the luminescent concentrator will include one or more body axes (such as a length axis, a width axis or a height axis), with the exit surface being configured (substantially) perpendicular to such axis. Hence, in general, the light input surface(s) will be configured (substantially) perpendicular to the light exit surface. Thus, the light exit surface is especially configured perpendicular to the one or more light input surfaces. Therefore, especially the surface comprising the light exit surface does not comprise a light input surface.

Downstream of the light exit surface, optionally an optical filter may be configured.

In yet a further embodiment, the lighting device further comprises a collimator configured downstream of the light exit surface and configured to collimate the converter light. Such collimator, like e.g. a CPC (compound parabolic concentrator), may be used to collimate the light escaping from the light exit surface and to provide a collimated beam of light.

The above embodiments in relation to a luminescent concentrator thus especially apply to the luminescent concentrator configured downstream from the solid state light source.

Further, the lighting device may include a heat sink configured to facilitate cooling of the solid state light source and/or luminescent concentrator. The heat sink may comprise or consist of copper, aluminum, silver, gold, silicon carbide, aluminum nitride, boron nitride, aluminum silicon carbide, beryllium oxide, silicon-silicon carbide, aluminum silicon carbide, copper tungsten alloys, copper molybdenum carbides, carbon, diamond, graphite, and combinations of two or more thereof. The lighting device may further include one or more cooling elements configured to cool the luminescent concentrator.

Hence, the peak maximum of the excitation light, i.e. the light source light, and the isosbestic point(s) of the luminescent material are especially selected such that they essentially overlap. In a specific embodiment, the light source is configured to provide said light source light having a peak maximum (MX2), wherein said peak maximum (MX2) is selected within 10 nm, especially 5 nm, of said isosbestic point (IP). Further, especially the light source provides light source light having an emission band (i.e. the excitation light for the luminescent material) having a FWHM of equal to or less than 20 nm, but especially the band width is substantially smaller, such as equal to or less than 10 nm, like 5 nm or less (such as in the case of a laser). Here, the bandwidth of the light source light is indicated in relation to operation at maximum power.

Further, as indicated above, the merits of the invention may even be more relevant when the solid state light source is a high power solid state light source and/or its light is relatively focused. Hence, in a further embodiment the light source is configured to provide said light source light to said light input surface of the luminescent concentrator with a power which leads to irradiance on the light input surface of the luminescent concentrator of at least 1 W/cm². Especially, the at least one solid state light source is configured to provide said light source light to said light input surface with a power which leads to irradiance on the light input surface of the luminescent concentrator of at least 1 W/cm², such as at least 5 W/cm², even more especially at least 10 W/cm², yet more especially at least 25 W/cm².

In a specific embodiment the lighting device is configured to provide said lighting device light with a radiance of at least 2 W/(sr.mm²). The unit "sr" refers to steradian (solid angle). Also even higher radiance may be achieved, such as at least 5 W/(sr.mm²) to the luminescent concentrator, such as in the range of 5-50 W/(sr.mm²).

As indicated above, the lighting device light consists of (i) at least part of said luminescent material light, or (ii) at least part of said luminescent material light and part of said light source light.

The lighting device may also comprise a plurality of lighting units, of which one or more may be the same, but of which also one or more may be different. Hence, in yet a further embodiment the lighting device further comprises a plurality of said lighting units, wherein each lighting unit is configured to provide a corresponding luminescent material light, wherein the lighting device light comprises one or more of said luminescent material light. For instance, also in this way e.g. white lighting device light may be generated.

Hence, in a specific embodiment, the lighting device is configured to provide white lighting device light. Note that the lighting device may also be configured to provide colored lighting device light. Further, when the lighting device comprise more than one (different) light sources and/or more than one (different) luminescent materials, configurations of light source(s) and luminescent material(s) may be chosen that provide colored light.

Further, the lighting device may also comprise a control unit configured to control the intensity of the light source light. Thereby, the intensity of the lighting device light may be controlled, and optionally also the color of the lighting device light.

Especially, the color point of the lighting device light is thus substantially independent of the temperature of the luminescent material. Hence, in a specific embodiment the lighting device may have a color point change (of the lighting device light) in the range of |Δx|≤0.05 and/or |Δy|≤0.05, especially |Δx|≤0.03 and/or |Δy|≤0.03, for a luminescent material temperature in the range of 50-100 °C, even more especially 50-150 °C, yet even more especially 50-200 °C (relative to the color point of the luminescent material at 50 °C). Hence, the color point of the lighting device light may substantially be independent of the temperature of the luminescent material. Hence, by exciting with the light source in the isosbestic (excitation) point, such substantially luminescent temperature independent color points of the lighting device light may be obtained. Of course, when the lighting device includes e.g. one or more other solid state light source, optionally also the color point may be varied.

The invention also provides in a further aspect a lighting apparatus ("apparatus") comprising the lighting device as defined herein. Hence, in a further embodiment of the lighting apparatus, this apparatus further comprises one or more further lighting devices, wherein the lighting device and the one or more further lighting devices are configured to provide white lighting apparatus light. Especially, the one or more further lighting devices comprise one more lighting devices as defined herein. For instance, lighting devices generating blue, green and red light may be combined. Alternatively or additionally, a lighting device as defined herein generating blue light may be used to illuminate a yellow phosphor.

The lighting device may be part of or may be applied in e.g. office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, decorative lighting systems, portable systems, automotive applications, green house lighting systems, horticulture lighting, or LCD backlighting. Especially, the lighting device as defined herein or the lighting apparatus according as defined herein may be used in projection lighting, stage lighting or automotive lighting, etc.. Hence, in an embodiment the invention also provides a digital projector comprising the lighting device as defined herein.

The terms "violet light" or "violet emission" especially relates to light having a wavelength in the range of about 380-440 nm. The terms "blue light" or "blue emission" especially relates to light having a wavelength in the range of about 440-495 nm (including some violet and cyan hues). The terms "green light" or "green emission" especially relate to light having a wavelength in the range of about 495-570 nm. The terms "yellow light" or "yellow emission" especially relate to light having a wavelength in the range of about 570-590 nm. The terms "orange light" or "orange emission" especially relate to light having a wavelength in the range of about 590-620 nm. The terms "red light" or "red emission" especially relate to light having a wavelength in the range of about 620-780 nm. The term "pink light" or "pink emission" refers to light having a blue and a red component. The terms "visible", "visible light" or "visible emission" refer to light having a wavelength in the range of about 380-780 nm.

Hence, especially the light source of the lighting device is adapted to excite the luminescent material in an isosbestic point of said excitation band.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1d schematically depict some aspects of the invention; and
Fig. 2a-2b show absorption (excitation) characteristics at different temperatures (Fig. 2a) and different wavelengths (Fig. 2b) of YAG;

The schematic drawings are not necessarily on scale.

### DETAILED DESCRIPTION OF THE EMBODIMENTS

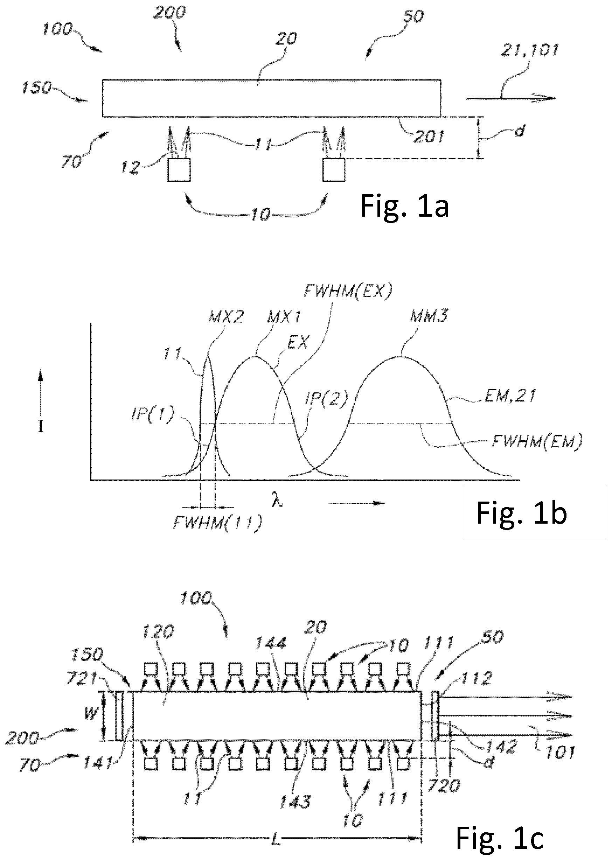

Fig. 1a schematically depicts an embodiment of a lighting device 100 configured to generate lighting device light 101. The lighting device 100 comprises a light source 10, configured to generate light source light 11, and a luminescent material 20, configured to convert at least part of the light source light 11 into luminescent material light 21. The light downstream of the lighting device 100 is indicated with reference 101. The light 101 at least comprises the emission or luminescence of the luminescent material 20, i.e. the luminescent material light 21. Optionally, some of the light source light 11 might also be comprised by the lighting device light 101. This may not be a problem, as the wavelength of the light source light and the luminescent material light may be substantially identical and/or may have a desired color (such as blue light source light with yellow luminescent material light).

The light source 10 is configured upstream of the luminescent material 20, the luminescent material light 21 emanates downstream from said luminescent material. Especially, herein transmissive configuration are applied. The terms "upstream" and "downstream" relate to an arrangement of items or features relative to the propagation of the light from a light generating means (here the especially the first light source), wherein relative to a first position within a beam of light from the light generating means, a second position in the beam of light closer to the light generating means is "upstream", and a third position within the beam of light further away from the light generating means is "downstream". Here, by way of example a transmissive configuration is depicted. However, as indicated below, also reflective configurations may be chosen.

Fig. 1a schematically depicts an embodiment of the lighting device 100 comprising a luminescent concentrator 50 comprising the luminescent material 20. Reference 70 indicates the (functional) combination of the light source 10 and the luminescent material 20, and reference 150 indicates the luminescent concentrator body. Reference d indicates the shortest distance between the light source 10, especially its light exit surface, indicated with reference 12, and the luminescent material 20 (here especially the converter surface 201), which may for instance be in the range of 0.1-100 mm, such as 0.2-20 mm.

Fig. 1b schematically depicts the emission EM or luminescent material light 21 of a luminescent material. The corresponding excitation, such as when monitoring the emission of the luminescent material at an emission maximum MM3 (peak wavelength) of the emission EM or luminescent material light 21. This generates a corresponding excitation curve EX, having a maximum MX1 (peak wavelength). This excitation appears to have two isosbestic points IP, one at smaller wavelengths at the high energy flank, indicated with IP(1) and one at longer wavelengths at the low energy flank of the excitation, indicated with IP(2). The Stokes shift is the (energy) difference between the excitation maximum MX1 and the emission maximum MM3. Note that IP(1) and IP(2) are not necessarily at the same height or level. The luminescent material is thus excited with the light source light 11 at an isosbestic point, here by way of example IP(1), leading to the luminescent material light 21 or emission EM.

Hence, the light source is especially configured to excite the luminescent material in the excitation band at an isosbestic point IP. This is reflected in Fig. 1b in that the excitation light or light source light 11 is indicated as (narrow) band substantially only overlapping with the excitation band 11 at an isosbestic point, here the high energy isosbestic point IP(1). MX2 is at about the same wavelength as IP(1). Hence, especially herein the light source is a light source for exciting the luminescent material in the excitation band at an isosbestic point IP.

For instance, one of these isosbestic points, here especially IP(1), may be in the blue range. Would the emission EM in the yellow range, than white lighting device light may be provided when desired.

For various applications such as projection, stage lighting and automotive headlamps it is desirable to have high intensity light sources.

Such light sources can be based on luminescent concentrator based concepts. The luminescent concentrator based light sources need to be cooled effectively in order to avoid thermal quenching. As a result of cooling surfaces the efficiency is reduced considerably.

In an embodiment, we suggest a light emitting device comprising a solid state light source adapted for, in operation, emitting light with a first spectral distribution, a luminescent light guide or concentrator comprising a first light input surface and a first light exit surface extending at an angle different from zero to one another, and the luminescent light guide or concentrator being adapted for receiving the light with the first spectral distribution at the first light input surface, converting at least a part of the light with the first spectral distribution to light with a second spectral distribution, guiding the light with the second spectral distribution to the first light exit surface and coupling the light with the second spectral distribution out of the first light exit surface wherein the shift in wavelength between absorption and emission of the narrow emitter is especially below 20 nm, more especially below 10 nm, and most especially below 5 nm. Further embodiments of the luminescent concentrator (light guide or waveguide) are described below.

An embodiment of the luminescent concentrator as defined herein is schematically depicted in Fig. 1c which schematically depicts a lighting device 100 comprising a plurality of solid state light sources 10 and a luminescent concentrator 50, such as an elongated (ceramic) body having a first surface 141 and a second surface 142 defining a length L of the (elongated) concentrator body 150. The (elongated) concentrator body 150 comprises one or more light input surfaces 111, here by way of example two oppositely arranged surfaces, indicated with references 143 and 144 (which define e.g. the width W). Further the concentrator body 150 comprises a light exit surface 112, wherein the second surface 142 comprises said light exit surface 112. The entire second surface 142 may be used or configured as light exit surface. The plurality of solid state light sources 10 are configured to provide (blue) light source light 11 to the one or more light input surfaces 111, in this case to a first light input surface 143 and to a second light input surface 144, arranged opposite to the first light input surface 143. In an embodiment, the solid state light sources 10 are configured to provide to at least one of the light input surfaces 111 with a blue power Wₒₚₜ of in average especially, but not exclusively, at least 0.067 Watt/mm².

The (elongated) concentrator body 150 may comprises a ceramic material 120 configured to wavelength convert at least part of the (blue) light source light 11 into converter light 101, such as at least one or more of green and red converter light 101. References 720 and 721 indicate an (optional) optical filter and a(n optional) reflector, respectively. The former may reduce e.g. non-green light when green light is desired or may reduce non-red light when red light is desired. The latter may be used to reflect light back into the concentrator body or waveguide, thereby improving the efficiency. Note that more reflectors than the schematically depicted reflector 721 may be used.

The solid state light sources may in principle be any type of point light source, but is in an embodiment a solid state light source such as a Light Emitting Diode (LED), a Laser Diode, a plurality of LEDs or Laser Diodes or OLEDs or an array of LEDs or Laser Diodes, or a combination of any of these.

Further, the lighting device may include further optical elements, either separate from the waveguide and/or integrated in the waveguide, like e.g. a light concentrating element, such as a compound parabolic light concentrating element (CPC).

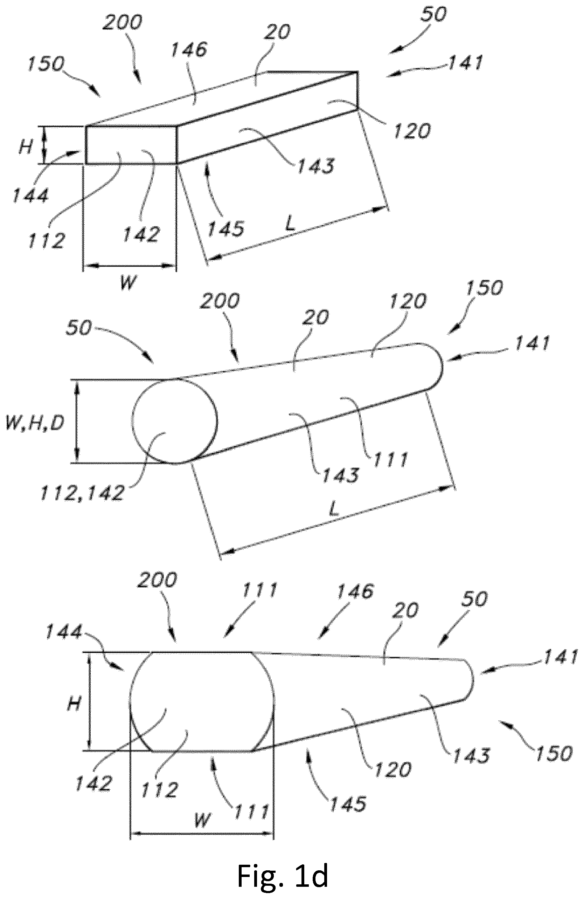

Fig. 1d schematically depicts some embodiments of possible concentrator bodies as waveguides or luminescent concentrators. The surfaces are indicated with references 141-146. The first variant, a plate-like or beam-like concentrator body has the surfaces 141-146. Solid state light sources, which are not shown, may be arranged at one or more of the surfaces 143-146. The second variant is a tubular rod, with first and second surfaces 141 and 142, and a circumferential surface 143. Solid state light sources (not shown) may be arranged at one or more positions around the concentrator body. Such a concentrator body will have a (substantially) circular or round cross-section. The third variant is substantially a combination of the two former variants, with two curved and two flat side surfaces. The variants shown in fig. 1d are not limitative. More shapes are possible, i.e. for instance referred to WO2006/054203, which is incorporated herein by reference. The concentrator bodies, which are used as light guides or waveguides, generally may be rod shaped or bar shaped light guides comprising a height H, a width W, and a length L extending in mutually perpendicular directions and are in embodiments transparent and luminescent. The light is guided generally in the length L direction. The height H is in embodiments < 10 mm, in other embodiments <5mm, in yet other embodiments < 2 mm. The width W is in embodiments < 10 mm, in other embodiments <5mm, in yet embodiments < 2 mm. The length L is in embodiments larger than the width W and the height H, in other embodiments at least 2 times the width W or 2 times the height H, in yet other embodiments at least 3 times the width W or 3 times the height H. Hence, the aspect ratio (of length/width) is especially larger than 1, such as equal to or larger than 2. Unless indicated otherwise, the term "aspect ratio" refers to the ratio length/width.

The aspect ratio of the height H to the width W is typically 1:1 (for e.g. general light source applications) or 1:2, 1:3 or 1:4 (for e.g. special light source applications such as headlamps) or 4:3, 16:10, 16:9 or 256:135 (for e.g. display applications). The light guides generally comprise a light input surface and a light exit surface which are not arranged in parallel planes, and in embodiments the at least one light input surface is perpendicular to the light exit surface. In order to achieve a high brightness, concentrated, light output, the area of light exit surface may be smaller than the area of the light input surface. The light exit surface can have any shape, but is in an embodiment shaped as a square, rectangle, round, oval, triangle, pentagon, or hexagon.

A lamp, a luminaire, and a lighting system comprising a light emitting device as defined herein may be used in one or more of the following applications: digital projection, automotive lighting, stage lighting shop lighting, home lighting, accent lighting, spot lighting, theater lighting, fiber optic lighting, display systems, warning lighting systems, medical lighting applications, decorative lighting applications. In yet another embodiment, we suggest the use of the lighting device in a lamp, a luminaire or lighting system. In yet another embodiment, we suggest the use of the lighting device in a projector system.

Materials such as quantum dots (QDs) or cerium comprising garnets can be used.

One of the most common phosphors used in the production of white LEDs is Ce:YAG (i.e. Y₃Al₅O₁₂:Ce³⁺).. In this example it is assumed that 75% of the blue light converted by YAG and there are no losses other than so called Stokes shift losses. However the transmittance as a function of temperature through such a phosphor ceramic with a Ce activator is temperature dependent as shown in Fig. 2a. This figure shows that the transmission shows an increase with an increasing temperature. When such a plate is illuminated by a solid state light source one can produce white light by partial absorption and conversion of blue to yellow light. However as the temperature changes the ratio of blue to yellow would change altering the color point of the total light. It can be seen that as a function of temperature at 430 nm there is almost no absorption dependence as opposed to other wavelengths (Fig. 2b).

The color points of lighting device light was measured for various excitation wavelengths at two temperatures (60 and 250 °C). A shift in the color coordinates of the lighting device light was observed (in the order of at least |Δx|=0.05 and/or |Δy|=0.05, except for the one using 430 nm as peak wavelength of the light source light. We therefore suggest matching the emission peak of the solid state light source with the absorption wavelength of the phosphor where the absorbance of the phosphor shows almost no temperature dependence (according to Fig 2a in this phosphor case it is around 430 and around 490 nm) in order to obtain temperature independent color point showing white light source.

Also other types of garnets were measured, such as LuAG 2% Ce (IP: 421 nm and 478 nm), (Y,Gd)AG 0.2% Ce; 10% Gd (IP: 425 nm and 498 nm), YAG 2% Ce (IP: 430 nm and 493 nm), YAG 0.4% Ce (IP: 429 nm and 490 nm). In general, all these garnets appear to provide a stable color point with substantially no variation in the color point up to a temperature in the range of 200-300 °C. Here, "IP" indicates isosbestic point and the wavelengths indicate the wavelengths at which the two respective isosbestic points were found in the experiments.

The term "substantially" herein, such as in "substantially all light" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A lighting device (100) comprising a lighting unit (70), wherein the lighting unit (70) comprises (i) at least one solid state light source (10) configured to generate light source light (11) and (ii) an elongated luminescent concentrator (70) comprising at least one light input surface (143, 144, 201) and a light exit surface (142) extending at an angle different from zero with respect to one another, wherein the at least one solid state light source (10) is configured to provide the light source light (11) to the at least one light input surface, the luminescent concentrator (70) comprising a luminescent material (20) configured to convert at least part of the light source light (11) into luminescent material light (21), wherein the luminescent material (20) comprises a cerium doped garnet material, wherein the lighting device is configured to generate lighting device light (101) comprising at least part of said luminescent material light (21), wherein the luminescent material (20) is configured to provide said luminescent material light (21) upon excitation by said light source light (11) in an excitation band (EX) of said luminescent material (20), wherein the light source (10) is configured to provide said light source light (11) with a full width half maximum (FWHM) of equal to or less than 20 nm, and wherein said light source (10) is configured to excite the luminescent material (20) in an isosbestic point (IP) of said excitation band (EX), wherein the light source (10) is configured to provide said light source light (11) having a peak maximum (MX2), wherein said peak maximum (MX2) is selected within 10 nm of said isosbestic point (IP).

2. The lighting device (100) according to claim 1, wherein the luminescent material (20) comprises an isosbestic point (IP) in the blue wavelength range of the visible spectrum, and wherein the solid state light source (11) is configured to generate blue light source light (11).

3. The lighting device (100) according to any one of the preceding claims, wherein the light source (10) is configured to provide said light source light (11) having a peak maximum (MX2), wherein said peak maximum (MX2) is selected within 5 nm of said isosbestic point (IP).

4. The lighting device (100) according to any one of the preceding claims, wherein the at least one solid state light source (10) comprises a light emitting surface (12), and wherein the light input surface (143, 144, 201) of the luminescent concentrator is configured not in physical contact with said light emitting surface (12) of the at least one solid state light source (10).

5. The lighting device (100) according to claim 4, wherein the area (AL) of the light emitting surface (12), the area (A) of the at least one light input surface (143, 144, 201) of the luminescent concentrator (70) and the area (E) of the light exit surface (142) of the luminescent concentrator, are in the ranges of 0.8≤A/AL≤1.2 and 0.8≤E/AL≤1.5.

6. The lighting device (100) according to any one of the preceding claims, wherein the light source (10) is configured to provide said light source light (11) having a peak maximum (MX2), wherein said peak maximum (MX2) is selected within 5 nm of said isosbestic point (IP), wherein the light source light (11) has a full width half maximum (FWHM) of equal to or less than 5 nm, wherein the light source (10) is configured to provide said light source light (11) to said light input surface (143, 144, 201) with a power which leads to irradiance on the illuminated surface of the convertor of at least 1 W/cm².

7. The lighting device (100) according to any one of the preceding claims, wherein the elongated luminescent concentrator comprises a geometrical concentration factor, defined as the ratio of the area of the at least one light input surface (143, 144, 201) and the area of the light exit surface (142), of at least 1.5.

8. The lighting device (100) according to any one of the preceding claims, wherein a reflector (721) is provided at or near a surface opposite of the light exit surface (142) of the luminescent concentrator (70).

9. The lighting device (100) according to any one of the preceding claims, wherein the luminescent material (20) comprises a cerium doped garnet material of class of A₃B₅O₁₂:Ce³⁺, wherein A is selected from the group consisting of Y, Gd, Tb and Lu, and wherein B is selected from the group consisting of Al, Ga and Sc.

10. The lighting device (100) according to any claims 1-9, wherein the lighting device light (101) consists of (i) at least part of said luminescent material light (21), or (ii) at least part of said luminescent material light (21) and part of said light source light (11).

11. The lighting device (100) according to any one of the preceding claims, wherein the lighting device (100) is configured to provide white lighting device light (101) having a color point change in the range of |Δx|≤0.03 and/or |Δy|≤0.03 for a luminescent material temperature in the range of 50-200 °C.

12. A lighting apparatus (1000) comprising the lighting device (100) according to any one of the preceding claims.

13. The lighting apparatus (1000) according to claim 12, further comprising one or more further lighting devices (1100), wherein the lighting device (100) and the one or more further lighting devices (1100) are configured to provide white lighting apparatus light (1001).

14. A digital projector comprising the lighting device according to any one of claims 1-11.

15. Use of the lighting device (100) according to any one of claims 1-11 or the lighting apparatus (1000) according to any one of claims 12-13 in projection lighting or stage lighting.

## Patentansprüche

1. Beleuchtungsvorrichtung (100), umfassend eine Beleuchtungseinheit (70), wobei die Beleuchtungseinheit (70) (i) zumindest eine Festkörperlichtquelle (10), welche konfiguriert ist, Lichtquellenlicht (11) zu erzeugen, und (ii) einen länglichen Lumineszenzkonzentrator (70), welcher zumindest eine Lichteintrittsoberfläche (143, 144, 201) und eine Lichtaustrittsoberfläche (142) umfasst, welche sich in einem von Null unterschiedlichen Winkel in Bezug zueinander erstrecken, umfasst, wobei die zumindest eine Festkörperlichtquelle (10) konfiguriert ist, das Lichtquellenlicht (11) für die zumindest eine Lichteintrittsoberfläche bereitzustellen, wobei der Lumineszenzkonzentrator (70) einen Leuchtstoff (20) umfasst, welcher konfiguriert ist, zumindest einen Teil des Lichtquellenlichts (11) in Leuchtstofflicht (21) umzuwandeln, wobei der Leuchtstoff (20) ein Cerium-dotiertes Granatmaterial umfasst, wobei die Beleuchtungsvorrichtung konfiguriert ist, Beleuchtungsvorrichtungslicht (101) zu erzeugen, welches zumindest einen Teil des Leuchtstofflichts (21) umfasst, wobei der Leuchtstoff (20) konfiguriert ist, das Leuchtstofflicht (21) bei Anregung durch das Lichtquellenlicht (11) in einem Anregungsband (EX) des Leuchtstoffs (20) bereitzustellen, wobei die Lichtquelle (10) konfiguriert ist, das Lichtquellenlicht (11) mit einer vollen Halbwertsbreite (FWHM) von gleich oder kleiner als 20 nm bereitzustellen, und wobei die Lichtquelle (10) konfiguriert ist, den Leuchtstoff (20) in einem isobestischen Punkt (IP) des Anregungsbandes (EX) anzuregen, wobei die Lichtquelle (10) konfiguriert ist, das Lichtquellenlicht (11) mit einem Peakmaximum (MX2) bereitzustellen, wobei das Peakmaximum (MX2) innerhalb von 10 nm von dem isobestischen Punkt (IP) ausgewählt wird.

2. Beleuchtungsvorrichtung (100) nach Anspruch 1, wobei der Leuchtstoff (20) einen isobestischen Punkt (IP) in dem blauen Wellenlängenbereich des sichtbaren Spektrums umfasst, und wobei die Festkörperlichtquelle (11) konfiguriert ist, blaues Lichtquellenlicht (11) zu erzeugen.

3. Beleuchtungsvorrichtung (100) nach einem der vorstehenden Ansprüche, wobei die Lichtquelle (10) konfiguriert ist, das Lichtquellenlicht (11) mit einem Peakmaximum (MX2) bereitzustellen, wobei das Peakmaximum (MX2) innerhalb von 5 nm von dem isobestischen Punkt (IP) ausgewählt wird.

4. Beleuchtungsvorrichtung (100) nach einem der vorstehenden Ansprüche, wobei die zumindest eine Festkörperlichtquelle (10) eine lichtemittierende Oberfläche (12) umfasst, und wobei die Lichteintrittsoberfläche (143, 144, 201) des Lumineszenzkonzentrators nicht in physikalischem Kontakt mit der lichtemittierenden Oberfläche (12) der zumindest einen Festkörperlichtquelle (10) konfiguriert ist.

5. Beleuchtungsvorrichtung (100) nach Anspruch 4, wobei die Fläche (AL) der lichtemittierenden Oberfläche (12), die Fläche (A) der zumindest einen Lichteintrittsoberfläche (143, 144, 201) des Lumineszenzkonzentrators (70) und die Fläche (E) der Lichtaustrittsoberfläche (142) des Lumineszenzkonzentrators in den Bereichen von 0,8≤A/AL≤1,2 und 0,8≤E/AL≤1,5 sind.

6. Beleuchtungsvorrichtung (100) nach einem der vorstehenden Ansprüche, wobei die Lichtquelle (10) konfiguriert ist, das Lichtquellenlicht (11) mit einem Peakmaximum (MX2) bereitzustellen, wobei das Peakmaximum (MX2) innerhalb von 5 nm von dem isobestischen Punkt (IP) ausgewählt wird, wobei das Lichtquellenlicht (11) eine volle Halbwertsbreite (FWHM) von gleich oder kleiner als 5 nm aufweist, wobei die Lichtquelle (10) konfiguriert ist, das Lichtquellenlicht (11) für die Lichteintrittsoberfläche (143, 144, 201) mit einer Energie bereitzustellen, welche zu einer Bestrahlungsstärke auf der beleuchteten Oberfläche des Konverters von zumindest 1 W/cm² führt.

7. Beleuchtungsvorrichtung (100) nach einem der vorstehenden Ansprüche, wobei der längliche Lumineszenzkonzentrator einen geometrischen Konzentrationsfaktor, welcher als das Verhältnis der Fläche der zumindest einen Lichteintrittsoberfläche (143, 144, 201) und der Fläche der Lichtaustrittsoberfläche (142) definiert ist, von zumindest 1,5 umfasst.

8. Beleuchtungsvorrichtung (100) nach einem der vorstehenden Ansprüche, wobei ein Reflektor (721) an oder nahe einer Oberfläche gegenüber der Lichtaustrittsoberfläche (142) des Lumineszenzkonzentrators (70) bereitgestellt ist.

9. Beleuchtungsvorrichtung (100) nach einem der vorstehenden Ansprüche, wobei der Leuchtstoff (20) ein Cerium-dotiertes Granatmaterial der Klasse A₃B₅O₁₂:Ce³⁺ umfasst, wobei A ausgewählt ist aus der Gruppe, bestehend aus Y, Gd, Tb und Lu, und wobei B ausgewählt ist aus der Gruppe, bestehend aus Al, Ga und Sc.

10. Beleuchtungsvorrichtung (100) nach einem der Ansprüche 1-9, wobei das Beleuchtungsvorrichtungslicht (101) aus (i) zumindest einem Teil des Leuchtstofflichts (21) oder (ii) zumindest einem Teil des Leuchtstofflichts (21) und einem Teil des Lichtquellenlichts (11) besteht.

11. Beleuchtungsvorrichtung (100) nach einem der vorstehenden Ansprüche, wobei die Beleuchtungsvorrichtung (100) konfiguriert ist, weißes Beleuchtungsvorrichtungslicht (101) mit einer Farbpunktänderung in dem Bereich von |Δx|≤0,03 und/oder |Δy|≤0,03 für eine Leuchtstofftemperatur in dem Bereich von 50-200 °C bereitzustellen.

12. Beleuchtungseinrichtung (1000), umfassend die Beleuchtungsvorrichtung (100) nach einem der vorstehenden Ansprüche.

13. Beleuchtungseinrichtung (1000) nach Anspruch 12, weiter eine oder mehrere weitere Beleuchtungsvorrichtungen (1100) umfassend, wobei die Beleuchtungsvorrichtung (100) und die eine oder mehreren weiteren Beleuchtungsvorrichtungen (1100) konfiguriert sind, weißes Beleuchtungseinrichtungslicht (1001) bereitzustellen.

14. Digitaler Projektor, umfassend die Beleuchtungsvorrichtung nach einem der Ansprüche 1-11.

15. Verwendung der Beleuchtungsvorrichtung (100) nach einem der Ansprüche 1-11 oder der Beleuchtungseinrichtung (1000) nach einem der Ansprüche 12-13 in Projektionslicht oder Bühnenbeleuchtung.

## Revendications

1. Dispositif d'éclairage (100) comprenant une unité d'éclairage (70), dans lequel l'unité d'éclairage (70) comprend (i) au moins une source lumineuse à semi-conducteurs (10) conçue pour générer de la lumière de source lumineuse (11) et (ii) un concentrateur luminescent allongé (70) comportant au moins une surface d'entrée de lumière (143, 144, 201) et une surface de sortie de lumière (142) se prolongeant à un angle différent de zéro l'une par rapport à l'autre, dans lequel l'au moins une source lumineuse à semi-conducteurs (10) est conçue pour fournir la lumière de source lumineuse (11) à l'au moins une surface d'entrée de lumière, le concentrateur luminescent (70) comprenant un matériau luminescent (20) conçu pour convertir au moins partie de la lumière de source lumineuse (11) en lumière de matériau luminescent (21), dans lequel le matériau luminescent (20) comprend dans lequel le dispositif d'éclairage est conçu pour générer de la lumière de dispositif d'éclairage (101) comprenant au moins une partie de ladite lumière de matériau luminescent (21), dans lequel le matériau luminescent (20) est conçu pour fournir ladite lumière de matériau luminescent (21) lors de l'excitation par ladite lumière de source lumineuse (11) dans une bande d'excitation (EX) dudit matériau luminescent (20), dans lequel la source lumineuse (10) est conçue pour fournir ladite lumière de source lumineuse (11) avec une largeur à mi-hauteur (FWHM) égale ou inférieure à 20 nm, et dans lequel ladite source lumineuse (10) est conçue pour exciter le matériau luminescent (20) dans un point isosbestique (IP) de ladite bande d'excitation (EX), dans lequel la source lumineuse (10) est conçue pour fournir ladite lumière de source lumineuse (11) présentant un maximum de pic (MX2), dans lequel ledit maximum de pic (MX2) est sélectionné dans une limite de 10 nm dudit point isosbestique (IP).

2. Dispositif d'éclairage (100) selon la revendication 1, dans lequel le matériau luminescent (20) comprend un point isosbestique (IP) dans la plage de longueur d'onde bleue du spectre visible, et dans lequel la source lumineuse à semi-conducteurs (11) est conçue pour générer une lumière de source lumineuse bleue (11).

3. Dispositif d'éclairage (100) selon l'une quelconque des revendications précédentes, dans lequel la source lumineuse (10) est conçue pour fournir ladite lumière de source lumineuse (11) ayant un maximum de pic (MX2), dans lequel ledit maximum de pic (MX2) est sélectionné dans une limite de 5 nm dudit point isosbestique (IP).

4. Dispositif d'éclairage (100) selon l'une quelconque des revendications précédentes, dans lequel l'au moins une source lumineuse à semi-conducteurs (10) comprend une surface d'émission de lumière (12), et dans lequel la surface d'entrée de lumière (143, 144, 201) du concentrateur luminescent est conçu pour ne pas être en contact physique avec ladite surface d'émission de lumière (12) de l'au moins une source lumineuse à semi-conducteurs (10).

5. Dispositif d'éclairage (100) selon la revendication 4, dans lequel l'aire (AL) de la surface d'émission de lumière (12), l'aire (A) de l'au moins une surface d'entrée de lumière (143, 144, 201) du concentrateur luminescent (70) et l'aire (E) de la surface de sortie de lumière (142) du concentrateur luminescent, sont dans les plages de 0,8 ≤ A/AL ≤ 1,2 et 0,8 ≤ E/AL ≤ 1,5.

6. Dispositif d'éclairage (100) selon l'une quelconque des revendications précédentes, dans lequel la source lumineuse (10) est conçue pour fournir ladite lumière de source lumineuse (11) présentant un maximum de pic (MX2), dans lequel ledit maximum de pic (MX2) est sélectionné dans une limite de 5 nm dudit point isosbestique (IP), dans lequel la lumière de source lumineuse (11) a une largeur totale à mi-hauteur (FWHM) égale ou inférieure à 5 nm, dans lequel la source lumineuse (10) est conçue pour fournir ladite lumière de source lumineuse (11) à ladite surface d'entrée de lumière (143, 144, 201) avec une puissance qui conduit à un éclairement énergétique sur la surface éclairée du convertisseur d'au moins 1 W/cm².

7. Dispositif d'éclairage (100) selon l'une quelconque des revendications précédentes, dans lequel le concentrateur luminescent allongé comprend un facteur de concentration géométrique, défini comme le rapport de l'aire de l'au moins une surface d'entrée de lumière (143, 144, 201) et de l'aire de la surface de sortie de lumière (142), d'au moins 1,5.

8. Dispositif d'éclairage (100) selon l'une quelconque des revendications précédentes, dans lequel un réflecteur (721) est prévu au niveau ou à proximité d'une surface opposée à la surface de sortie de lumière (142) du concentrateur luminescent (70).

9. Dispositif d'éclairage (100) selon l'une quelconque des revendications précédentes, dans lequel le matériau luminescent (20) comprend un matériau de grenat dopé au cérium de catégorie A₃B₅O₁₂:Ce³⁺, dans lequel A est sélectionné dans le groupe constitué de Y, Gd, Tb et Lu, et dans lequel B est sélectionné dans le groupe constitué de Al, Ga et Sc.

10. Dispositif d'éclairage (100) selon l'une quelconque des revendications 1 à 9, dans lequel la lumière de dispositif d'éclairage (101) est constituée (i) au moins en partie de ladite lumière de matériau luminescent (21) ou (ii) au moins en partie de ladite lumière de matériau luminescent (21) et en partie de ladite lumière de source lumineuse (11).

11. Dispositif d'éclairage (100) selon l'une quelconque des revendications précédentes, dans lequel le dispositif d'éclairage (100) est conçu pour fournir une lumière de dispositif d'éclairage (101) présentant un changement de point de couleur dans la plage de |Δx| ≤ 0,03 et/ou |Δy| ≤ 0,03 pour une température de matériau luminescent dans la plage de 50 à 200 °C.

12. Appareil d'éclairage (1000) comprenant le dispositif d'éclairage (100) selon l'une quelconque des revendications précédentes.

13. Appareil d'éclairage (1000) selon la revendication 12, comprenant en outre un ou plusieurs autres dispositifs d'éclairage (1100), dans lequel le dispositif d'éclairage (100) et les un ou plusieurs autres dispositifs d'éclairage (1100) sont conçus pour fournir de la lumière d'appareil d'éclairage blanche (1001).

14. Projecteur numérique comprenant le dispositif d'éclairage selon l'une quelconque des revendications 1 à 11.

15. Utilisation du dispositif d'éclairage (100) selon l'une quelconque des revendications 1 à 11 ou de l'appareil d'éclairage (1000) selon l'une quelconque des revendications 12 à 13 dans un éclairage de projection ou un éclairage de scène.
